# EUROPEAN PATENT SPECIFICATION

(11) **EP 0 815 541 B1**
(45) Date of publication and mention of the grant of the patent: **06.05.1999**
(21) Application number: 96905985.6
(22) Date of filing: 08.03.1996
(51) Int. Cl.: G07D 7/00

(54) **SECURITY SYSTEM FOR DOCUMENTS WITH A MAGNETIC TRACK FOR RECORDING INFORMATION**
SICHERHEITSSYSTEM FÜR DOKUMENTE MIT EINER MAGNETISCHEN SPUR ZUR AUFZEICHNUNG VON INFORMATIONEN
SYSTEME DE SECURITE POUR DOCUMENTS A PISTE MAGNETIQUE D'ENREGISTREMENT D'INFORMATIONS

(30) Priority: 24.03.1995 IT RM950179
(43) Date of publication of application: 07.01.1998
(73) Proprietor: PRM Industriale S.p.A., 00040 Pomezia RM (IT)
(72) Inventor: MARTELLA, Paolo, I-00191 Roma (IT)
(74) Representative: Cavattoni, Fabio
(86) International application number: IT9600044
(87) International publication number: WO9630880

(56) References cited:
- EP-A- 0 268 450
- EP-A- 0 512 925
- US-A- 4 158 433
- US-A- 4 863 196
- US-A- 5 255 129

## Description

The present invention relates to a security system for documents having magnetic track for recording information.

Documents with magnetic track for recording information have long since been known. These documents can be credit instruments of a purely accounting purpose whose manufacturing cost is quite neglectable or they can be documents whose manufacturing cost is an important element for their diffusion in the market. For example, to the first kind belong the credit cards, identity cards or equivalent and to the second kind belong the travel documents such as travel documents as the Boarding Pass and the like.

These documents involve security problems due to falsification, illicit duplication, illegal re-write of data and other forms of tampering.

In the documents of the first kind such as credit cards, where costs are quite neglectable compared to the importance of the document, operators are inclined to use the so called "smart cards" that include a microprocessor or a laser board or similar that ensure a very high level of security.

With the documents of the second kind, i.e. travel documents, where production costs are important, the need of enhanced security of the data recorded in the magnetic track is felt but it should be implemented without significantly increasing production and management costs of the documents.

From document US-A-4,158,433 Peterson there is disclosed a method and apparatus for securing and storing personal information wherein use is made of the different properties between low-coercivity and high coercivity magnetic materials.

A document having encoded low and high coercivity is arranged to cooperate with a read - modify of conductors in a mechanically static operation much like the magnetic care memories used in the no-called "second generation" computers.

The purpose of present invention is to provide a security system for documents with pre-encoded or not pre-encoded magnetic track for recording information without significantly increasing production and management costs and, at the same time, to provide for a high resistance to tampering alteration of data and falsification.

The system of present invention is based on the fact that there are two systems of recording, namely:
- High coercivity (4000 Oersted) that shows the advantage of difficult eraseability of data even if the document is close to magnetic sources. This system requires a suitable read/write head;
- Low coercivity (300 Oersted) that is normally used by most customers but, if exposed to magnetic sources or static electricity or others, it can easily be erased. This system also requires appropriate read heads.

To be noted is that the read head at low coercivity can only read, without erasing and/or re-writing the data recorded in the single tracks of the high coercivity magnetic tracks.

According to present invention a security system is provided for documents having machine readable and/or writable magnetic area with areas of magnetic material having either low magnetic coercivity and high magnetic coercivity, where the magnetic area is in the form of a magnetic track deposited on a document and where the magnetic track is split into several tracks and at least one of the tracks is made with magnetic material having a coercivity different from the coercivity of the others, or at least one magnetic track is realised with a material of higher coercivity than the magnetic material of the remaining tracks, or at least one track is realised with a material of lower coercivity than the magnetic material of the remaining tracks.

The present invention will now be disclosed with reference to its forms of implementation as shown by way of illustration and not limitatively, with reference to the attached Figures wherein:
Figure 1 shows the typical magnetization curves (B-H) for materials having different coercivity;
Figure 2 shows an embodiment example of the security system according to the present invention; and

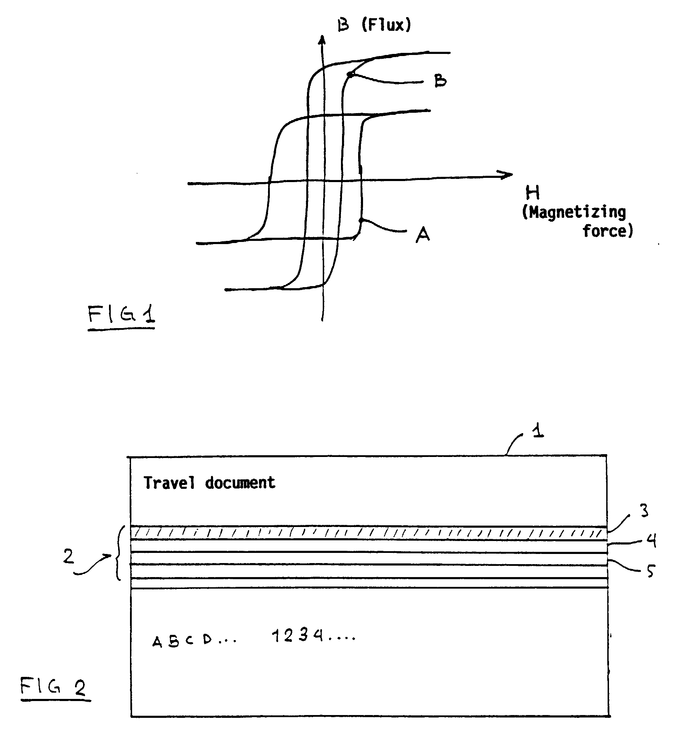

With reference to the drawings, in Figure 1 there are shown as an example a known characteristic B-H magnetization curves relating to a high coercivity material A and to a low coercivity material B.

These materials according to the magnetizing force H show a different behaviour.

A magnetizing force able to act on low coercivity material B will leave unchanged the state of magnetization of the high coercivity material.

A magnetizing force able to modify the state of magnetization of the high coercivity material A will change also the state of magnetization of the low coercivity material B. These different behaviours are well known to those having specific knowledge of the behaviour of magnetic materials.

In a document 1 that is a travel document or the like, besides the standard graphic markings indicated in simplified form, there is provided a magnetic strip shown in 2 as a whole, that is produced by means of known thermal transfer technology or by spreading magnetic material. The strip 2 operates as a system of tracks 3, 4, 5,... Over these tracks runs the airgap of a magnetic read/recording head that is not shown.

Among tracks 3, 4, 5,... at least one track is implemented with a magnetic material having a different coercivity in respect of the remaining tracks. For example, track 3 is implemented with low coercivity material. Of course, the order and the arrangement of the several tracks having different coercivity can change and can even form a code of geometrical nature, that is added to the encoding of data by magnetic means.

At this point the operating procedures are clear. While scanning the magnetically recorded information is always possible both with low and high coercivity material, write and modification operations of the recorded data that is actually an overwriting is not "always possible", because in order to write on the high coercivity layer a strong magnetizing force is necessary, while for the low coercivity layer a low magnetizing force is sufficient. As a consequence, the counterfeiter attempting to alter the high coercivity areas will modify the low coercivity areas evidencing the tampering while alterations at low magnetizing force will not succeed in modifying the data previously recorded in the high coercivity area.

Therefore, tampering attempts will entail the scrambling or destruction of the data in the low coercivity magnetic strip 2 evidencing any illegal manipulation.

The specific processes for applying the magnetic materials are not detailed as they are known to a person skilled in the art.

Also, equipments handling the documents according to the present invention are not disclosed because well known in the art. Moreover, the information supplied above allows an expert in the field to adjust the operating parameters (drive currents) to achieve the desired results.

This invention is described with reference to its presently preferred embodiment.

## Claims

1. A security system for documents having a machine readable and/or writable magnetic area having areas of magnetic material having either low magnetic coercivity and high magnetic coercivity, characterized in that said magnetic area is in the form of a magnetic track deposited on a document and in that the magnetic track is split into several tracks and at least one of the tracks is made with magnetic material having a coercivity different from the coercivity of the others, or at least one magnetic track is realised with a material of higher coercivity than the magnetic material of the remaining tracks, or at least one track is realised with a material of lower coercivity than the magnetic material of the remaining tracks.

## Patentansprüche

1. Sicherheitssystem für Dokumente mit einer maschinenlesbaren und/oder -beschreibbaren Magnetfläche mit Bereichen von magnetischem Material, die beides, eine niedrige magnetische Koerzitivkraft und eine hohe magnetische Koerzitivkraft aufweisen, dadurch gekennzeichnet, dass die besagte Magnetfläche in Form einer auf einem Dokument abgeschiedenen Magnetspur vorliegt, und dass die Magnetspur in mehrere Spuren unterteilt ist, und mindestens eine der Spuren mit magnetischem Material hergestellt ist, das eine Koerzitivkraft aufweist, die sich von der Koerzitivkraft der anderen unterscheidet, oder mindestens eine Magnetspur mit einem Material höherer Koerzitivkraft als das magnetische Material der übrigen Spuren ausgeführt ist, oder mindestens eine Spur mit einem Material niedrigerer Koerzitivkraft als das magnetische Material der übrigen Spuren ausgeführt ist.

## Revendications

1. Système de sécurité pour des documents ayant une zone magnétique lisible et/ou inscriptible par machine ayant des zones de matière magnétique qui ont une faible coercitivité magnétique ou une coercitivité magnétique élevée, caractérisé en ce que ladite zone magnétique est sous la forme d'une piste magnétique déposée sur un document et en ce que la piste magnétique est divisée en plusieurs pistes et au moins une des pistes est fabriquée avec une matière magnétique ayant une coercitivité différente de la coercitivité des autres, ou bien au moins une piste magnétique est réalisée avec une matière d'une coercitivité plus élevée que la matière magnétique des pistes restantes, ou bien au moins une piste est réalisée avec une matière de coercitivité plus faible que la matière magnétique des pistes restantes.
